(19) Europäisches Patentamt
European Patent Office
Office européen des brevets

(11) **EP 4 431 909 A1**

(12) **EUROPEAN PATENT APPLICATION**

(43) Date of publication:
**18.09.2024 Bulletin 2024/38**

(21) Application number: **23162493.3**

(22) Date of filing: **16.03.2023**

(51) International Patent Classification (IPC):
**G01N 15/14** (2024.01)     **B01L 3/00** (2006.01)

(52) Cooperative Patent Classification (CPC):
**G01N 15/1404;** B01L 3/502761; B01L 3/502776;
B01L 2400/0436; G01N 15/1484; G01N 2015/0053;
G01N 2015/142

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Vrije Universiteit Brussel
1050 Brussel (BE)**

(72) Inventors:
• **DE MALSCHE, Wim
2600 Berchem (BE)**
• **DE HEMPTINNE, Amaury
1495 Villers-la-Ville (BE)**
• **GELIN, Pierre
1780 Wemmel (BE)**

(74) Representative: **Winger
Mouterij 16 bus 101
3190 Boortmeerbeek (BE)**

(54) **ACOUSTIC RESONANCE IN MICROFLUIDICS**

(57)    The present invention relates to a method of influencing particles or flow in a plurality of microfluidic channels or channel sections. The method comprises obtaining a fluidic flow in a plurality of microfluidic channels or microfluidic channel sections and inducing acoustic resonance in the plurality of microfluidic channels or channel sections for influencing the flow or particles in the flow. Inducing acoustic resonance is obtained by applying to the plurality of microfluidic channels or channel sections a common acoustic signal having a frequency varying in a frequency range.

FIG. 1

**Description**

**Technical field of the invention**

The present invention relates to field of microfluidics. More specifically, the present invention relates to the use of acoustic resonance for influencing flow or particles therein in microfluidic devices with multiple microfluidic channels or channel sections.

**Background of the invention**

The use of acoustic resonance for influencing particles in a microfluidic channel is known.

In using acoustic resonance for influencing flow and particles in flow an important challenge as indicated by for example S. M. Hagsater et al. in Lab Chip, 2008, 8, 1178-1184, and Laurell et al. US2015253226 (A1) and WO2014178782 (A1) is the fact that the resonance frequency is closely related to the dimensions of the channel.

In a large number of applications, there is a need for upscaling to systems having a larger throughput. The challenge that there is a close link between the resonance frequency and the dimensions of the channels is even larger.

There is thus still a need in the art for devices and methods that address at least some of the above problems.

**Summary of the invention**

It is an object of the present invention to provide a good apparatus and methods for using acoustic resonance for influencing (e.g. controlling or guiding) flow or particles therein in a microfluidic device.

It was surprisingly found that despite the strong link between the resonance frequency and the dimensions and other properties of each individual channel, it was still possible to maintain resonance and influence flow and particles in flow in each of multiple parallel channels by applying a common signal and sweeping its frequency.

It is an advantage of embodiments of the present invention that these provide good methods and systems for using acoustic resonance in microfluidic devices with multiple channels or channel sections that operate in a flow regime. It is an advantage of embodiments of the present invention that methods and systems are provided overcoming the issue of the need for accurate control of the acoustic resonance frequency in channels when used in flow regime. The above objective is accomplished by a method and apparatus according to the present invention.

In a first object, the present invention relates to a method of influencing particles or flow in a plurality of microfluidic channels or channel sections, the method comprising obtaining a fluidic flow in a plurality of microfluidic channels or channel sections,

> inducing acoustic resonance in the plurality of microfluidic channels or channel sections for influencing the flow or particles in the flow,
> wherein said inducing acoustic resonance is obtained by applying to the plurality of microfluidic channels or channel sections a common acoustic signal having a frequency varying in a frequency range.

In some embodiments the microfluidic channels may be not interconnected. In other embodiments, channel sections may be envisaged which may be part or may not be part of the same channel. In some particular embodiments, the microfluidic channel sections or part thereof may be interconnected to form a single microfluidic channel.

It is an advantage of embodiments of the present invention that upscaling of the use of acoustic resonance, e.g. for influencing, guiding, .... particles can be obtained in an efficient manner when using parallel microfluidic channels or microfluidic channel sections. It is an advantage of embodiments of the present invention that the number of components required and/or the number of separate steps that need to be performed can be reduced or limited.

It is an advantage of embodiments of the present invention that flows in adjacent channels can be mixed simultaneously. This is relevant in the context of reactor operation, sample preparation, .... so that many channels (or sub-channels) can be mixed simultaneously, in the context of efficiently contacting liquids and molecules or particles contained in, with other species contained in the liquid or near present near surfaces. E.g. arrays of channels equipped with membranes can in this way be simultaneously operated, greatly enhancing the global separation speed when, when all channels are efficiently mixed simultaneously.

Also in the context of chromatography parallel channels, either isolated or interconnected, should be well mixed simultaneously so that the chromatographic dispersion (C-term dispersion) can be reduced during operation of so-called vortex chromatography operation. Vortex chromatography operation is described in Gelin et al. (2021) Reducing Taylor-Aris dispersion by exploiting lateral convection associated with acoustic streaming, Chem. Eng. J., 128031, in Westerbeek et al. (2020), Reduction of Taylor-Aris dispersion by lateral mixing for chromatography applications, Lab-on-a-chip, 20, 3938 - 3947 and in Westerbeek et al. in C-Term Reduction in 3 $\mu$m Open-Tubular High-Aspect-Ratio Channels in AC-EOF Vortex Chromatography Operation (2023), Analytical Chemistry,

The frequency may be swept in the frequency range. It is an advantage of embodiments of the present invention that by varying the frequency, no specific detailed determination of the exact resonance frequency of each channel is required. It is an advantage of embodiments of the present invention that small variations in dimensions do not imply that no acoustic resonance is obtained in channels with these small variations. It has surprisingly been found that on average a higher resonance was obtained for the channels compared to the resonance obtained when a particular frequency was used for each microfluidic channel (corresponding with the resonance frequency as defined amongst others by the channel dimensions). The higher than average resonance could be measured for all channels, so the system provides a better result for all channels, not only for a selection thereof.

It is an advantage of embodiments of the present invention that by using a varied or swept frequency, lower variation in resonance between the microfluidic channels or channel sections was obtained, compared to individual creation of resonance by adjusting the conditions with a fixed frequency for each channel or channel section individually.

It is an advantage of embodiments of the present invention that by using a varied or swept frequency, simultaneous resonance could be obtained in all microfluidic channels or channel sections.

The frequency range may encompass the frequencies of the acoustic resonance associated with each of the plurality of microfluidic channels or channel sections. The frequency of acoustic resonance associated with a microfluidic channel is amongst others or often predominantely determined by a dimension of the microfluidic channel.

The frequency may be varying in a repetitive manner. In some embodiments, the frequency may be sweeping according to a sinusoidal function, although embodiments are not limited thereto and other types of repetitive functions, such as for example saw tooth profiles, also can be used.

Varying the frequency in the frequency range may be performed such that the different frequencies in the frequency range are applied at least once within a time frame of 500ms or smaller, e.g. 250ms or smaller, e.g. 100ms or smaller, e.g. 50ms or smaller, e.g. 25ms or smaller , e.g. 10ms or smaller, e.g. 5ms or smaller.

The plurality of microfluidic channels or channel sections may be parallel to each other.

The plurality of microfluidic channels or channel sections may have substantially the same dimensions. In some embodiments, when the microfluidic channels or channel sections have substantially the same dimensions, the frequency range may be a range centered on the average resonance frequency corresponding with these dimensions.

In some embodiments, the different channels or channel sections may be designed to have substantially the same dimensions whereas in other embodiments the different channels or channel sections may have different dimensions. The frequency range may be adapted so that it covers the resonance frequencies of the microfluidic channels or channel sections. Applying a common acoustic signal may comprise applying a power signal having a varying frequency on a piezo-electric transducer.

The present invention also relates to a system for influencing particles or flow in a plurality of microfluidic channels or channel sections, the system comprising

> a microfluidic device having a plurality of microfluidic channels or channel sections,
> a pumping means for providing a flow in the plurality of microfluidic channels or channel sections,
> an acoustic resonance inducing means for inducing acoustic resonance in the plurality of microfluidic channels or channel sections for influencing the flow or particles in the flow, wherein the acoustic resonance inducing means thereby is adapted for applying to the plurality of microfluidic channels a common acoustic signal having a frequency varying in a frequency range.

The acoustic resonance inducing means may comprise a piezoelectric transducer, an electric source for applying a power to the piezoelectric transducer and a controller for controlling the frequency of the power applied to the piezo-electric transducer to vary in a frequency range during acoustic resonance generation.

The acoustic resonance inducing means may be adapted for applying the common acoustic signal in a frequency range encompassing the frequencies of the acoustic resonance associated with each of the plurality of microfluidic channels or channel sections.

Varying the frequency in the frequency range may be performed such that the different frequencies in the frequency range are applied at least once within a time frame of 500ms or smaller, e.g. 250ms or smaller, e.g. 100ms or smaller, e.g. 50ms or smaller, e.g. 25ms or smaller , e.g. 10ms or smaller, e.g. 5ms or smaller.

The plurality of microfluidic channels or channel sections may be parallel to each other and/or the plurality of microfluidic channels or channel sections may have substantially the same dimensions.

Where reference is made to substantially the same dimensions, reference may be made to microfluidic channels or channel sections having in design the same dimensions, whereby variation of the dimensions is caused by deviations during production of the microfluidic channels or channel sections.

The plurality of microfluidic channel subsections or part thereof are interconnected to form a single channel. The present invention also relates to the use of a method as described above for any of selecting particles in flow streams, contacting with particles in flow streams, focussing particles in flow streams, guiding particles in flow streams, mixing particles in flow streams, mixing flow streams, contacting flow streams in a plurality of microfluidic channels or channel sections.

Other features may correspond with standard or optional features as described for the other aspects.

It is to be noted that any features of any embodiment of the third aspect may be independently as correspondingly described for any embodiment of any of the other aspects of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG. 1 illustrates an example of a microfluidic device and an acoustic resonance inducing means as could be used in embodiments of the present invention, embodiments nevertheless not being limited thereto.

FIG. 2 illustrates an example of how resonance efficiency can be quantified, which can be used for evaluating embodiments of the present invention.

FIG. 3 illustrates an example of the sweeping of the frequency as can be used in embodiments of the present invention compared to the use of a constant frequency (dashed line).

FIG. 4 and FIG. 5 illustrate respectively the resonance value as a function of the channel and the resonance as function of the frequency in a single channel. It was found that the sweeping of the frequency results in simultaneous high resonance in all channels, according to embodiments of the present invention.

FIG. 6 illustrates the average resonance value and the average resonance value as function of the channel, according to embodiments of the present invention.

FIG. 7 illustrates the fraction of the channels having a resonance higher than the average resonance, according to embodiments of the present invention. The error bars represent plus and minus one standard deviation between experiment repeated in identical conditions with setup dismantled and rebuilt.

FIG. 8 illustrates two chip geometries as can be used in embodiments according to the present invention, whereby design (a) shows 4 parallel channels and design (b) shows 16 parallel channels.

FIG. 9 illustrates a histogram of the average interchannels R values as a function of the sweeping regime in a Si-based chip with 4 parallel channels, as used in embodiments according to the present invention.

FIG. 10 shows $R$ values as a function of the channels for Si-based chip with 4 parallel channels, illustrating characteristics of embodiments of the present invention.

FIG. 11 shows the results for a Si-based chip with 4 parallel channels, thus illustrating features of embodiments of the present invention. (a) The first histogram represents the average interchannels $R$ values as a function of the frequency regime (left scale), the line represents the variances of the $R$ values (right scale). (b) The second histogram represents the fraction of channels with a $R$ value higher than the total average $R$. The error bars represent plus and minus one standard deviation between experiment repeated in identical conditions with setup dismantled and rebuilt.

FIG. 12 illustrates (a) R values as a function of the channels for Si-based chip with 16 parallel channels, thus showing advantages of embodiments of the present invention. (b) R values as a function of the frequency in the channel number 8 for single frequency regimes (full line) and with the SW7 (dashed line).

FIG. 13 illustrates results for Si-based chip with 16 parallel channels, illustrating advantages of embodiments of the present invention. (a) The first histogram represents the average interchannels R values as a function of the frequency regime (left scale), the line represents the variances of the R values (right scale). (b) The second histogram represents the fraction of channels with a R value higher than the total average R. The error bars represent plus and minus one standard deviation between experiment repeated in identical conditions with setup dismantled and rebuilt.

FIG. 14 shows R values as a function of the channels for Al-based chip with 4 parallel channels.

FIG. 15 illustrates the results for Al-based chip with 4 parallel channels, showing features of embodiments of the present invention. (a) The first histogram represents the average interchannels R values as a function of the frequency regime (left scale), the line represents the variances of the $R$ values (right scale). (b) The second histogram represents the fraction of channels with a $R$ value higher than the total average $R$. The error bars represent plus and minus one standard deviation between experiment repeated in identical conditions with setup dismantled and rebuilt.

FIG. 16 illustrates (a) R values as a function of the channels for Al-based chip with 16 parallel channels. (b) R values as a function of the frequency in the channel number 8 for single frequency regimes (full line) and with the SW9 (dashed line).

FIG. 17 illustrates (a) Channels sections measurements. (b) Section of a channel in Si-based chip fabricated by photolithographic etching. (c) Section of a channel in Al-based chip fabricated by mechanical micromachining.

In the different figures, the same reference signs refer to the same or analogous elements.

## Description of illustrative embodiments

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still cooperate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a method of influencing particles or flow in a plurality of microfluidic channels. Embodiments of such a method allow getting maximal global (acoustic) resonance in a series of channels or channel sections simultaneously. This may for example be used when one wants to do e.g. an acoustic separation of cells in each of the channels in an upscaling approach. The sweeping approach may for example be used in a functional situation (focusing or particles, mixing of small molecules) when multiple channels or channel sections are to be operated (for example with the same -typically PZT- actuator as was done in the past for single channels). This may be used for large throughput acoustic separators, mixers (e.g. to make nanoparticles), but also e.g. in multiple parallel channels (or even pillar arrays) for e.g. chromatography wherein acoustics is to be used for vortex chromatography.

The method comprises obtaining a fluidic flow in a plurality of microfluidic channels or channel sections and inducing acoustic resonance in the plurality of microfluidic channels or channel sections for influencing the flow or particles in the flow. Inducing acoustic resonance is obtained by applying to the plurality of microfluidic channels a common acoustic signal having a frequency varying in a frequency range.

Further features and advantages will be described with reference to particular examples of embodiments of the present invention and/or correspond with features as expressed in the summary.

In a second aspect, the present invention also relates to a system for influencing particles or flow in a plurality of microfluidic channels or channel sections. The system comprises a microfluidic device having a plurality of microfluidic channels or channel sections. The system also comprises a pumping means for providing a flow in the plurality of microfluidic channels or channel sections.

The system further comprises a acoustic resonance inducing means for inducing acoustic resonance in the plurality of microfluidic channels or channel sections for influencing the flow or particles in the flow. The acoustic resonance inducing means thereby is adapted for applying to the plurality of microfluidic channels or channel sections a common acoustic signal having a frequency varying in a frequency range. In some embodiments, such an acoustic resonance inducing means may be based on a piezoelectric transducer, an electric source for applying a power to the piezoelectric transducer and a controller for controlling the frequency of the power applied to the piezoelectric transducer to vary in a frequency range during acoustic resonance generation.

Further features and advantages will be described with reference to particular examples of embodiments of the present invention and/or correspond with features as expressed in the summary.

In a third aspect, the present invention relates to the use of a method as described in the first aspect described above for any of selecting particles in flow streams, contacting with particles in flow streams, focussing particles in flow streams, guiding particles in flow streams, mixing particles in flow streams, mixing flow streams, contacting flow streams, in a plurality of microfluidic channels. Further features and advantages will be described with reference to particular examples of embodiments of the present invention and/or correspond with features as expressed in the summary.

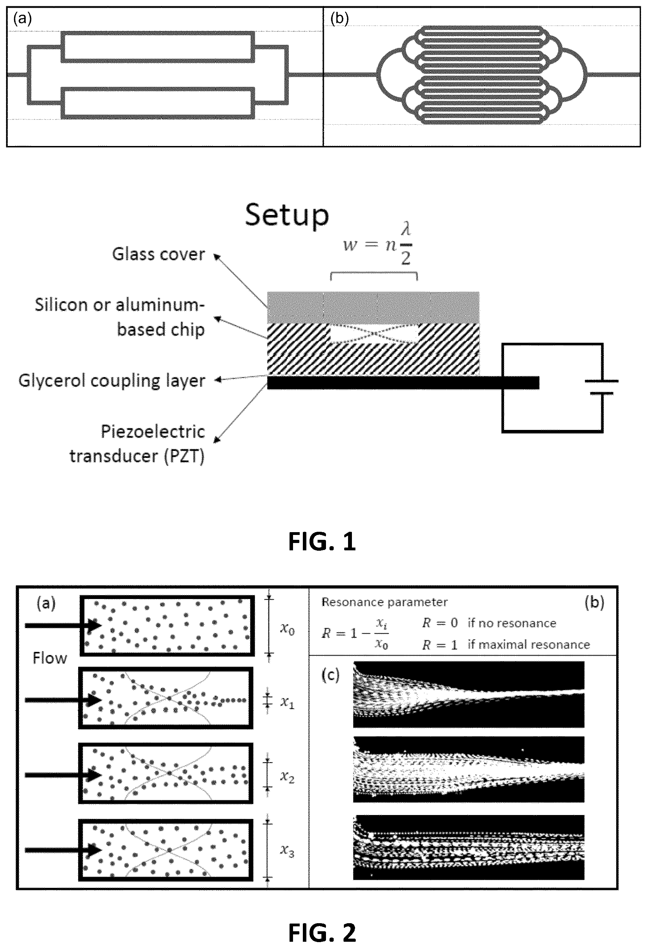

By way of illustration, FIG. 1 illustrates an example of a microfluidic device and an acoustic resonance inducing means as could be used in embodiments of the present invention, embodiments nevertheless not being limited thereto.

FIG. 2 illustrates an example of how resonance efficiency can be quantified, which can be used for evaluating embodiments of the present invention. The example shown in FIG. 2 illustrates a situation for focusing $5\mu m$ polystyrene particles.

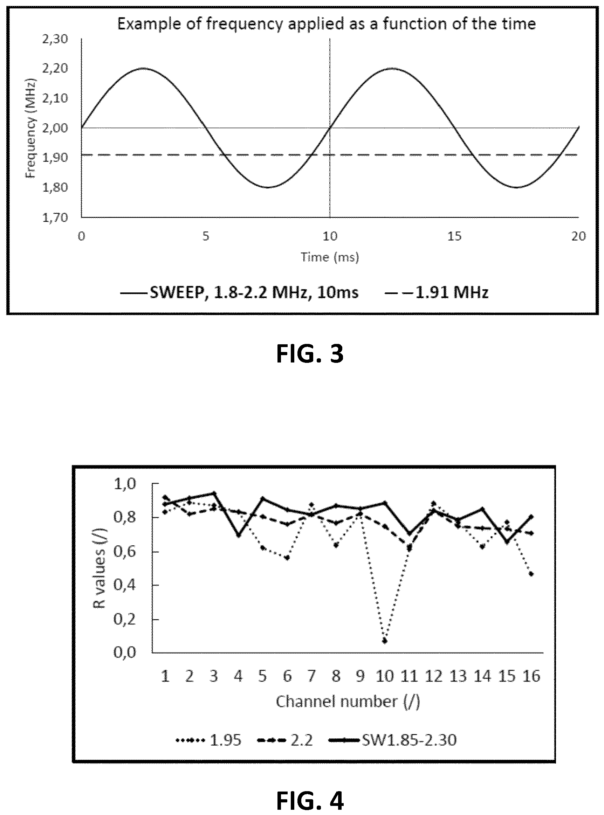

FIG. 3 illustrates an example of the sweeping of the frequency as can be used in embodiments of the present invention compared to the use of a constant frequency (dashed line). The example is shown for a sweep using a sinusoidal form with a period of 10ms in a frequency range between 1.8MHz and 2.2MHz compared to the use of a constant frequency at 1.91MHz. Whereas in theory 375$\mu$m wide channels were used resulting in a theoretical optimal frequency of 2MHz, the resonance frequencies in practice differ from this theoretical optimum. It was found that sweeping of the frequency resulted in simultaneous resonance in all channels, in a lower variation between the channels and in a higher average resonance. It was also found that there is no need for optimising towards the ideal frequency for a standing wave resonance of the channels but that sweeping the frequency in a range encompassing the actual resonance frequencies was sufficient.

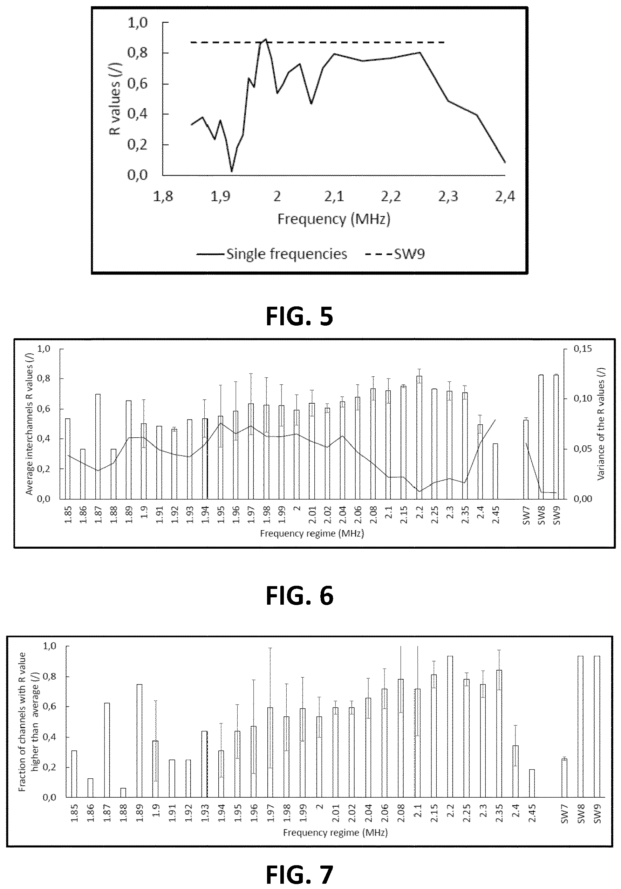

FIG. 4 and FIG. 5 illustrate respectively the resonance value as a function of the channel and the resonance as function of the frequency in a single channel. It was found that the sweeping of the frequency results in simultaneous high resonance in all channels. It was also found that the sweeping of the frequency results in a better or equal to better resonance compared to the use of all single frequencies.

FIG. 6 illustrates the average resonance value and the average resonace value as function of the channel. It can be seen that the sweeping of the frequency results in a higher average resonance (as can be seen on the left scale) and that the sweeping of the frequency results in a lower variation between the channels and hence in a more equivalent treatment in parallel (as can be seen on the right scale).

FIG. 7 illustrates the fraction of the channels having a resonance higher than the average resonance, illustrating that sweeping of the frequency results in a resonance in 100% of the channels that is higher than the average resonance.

By way of illustration, embodiments of the present invention not being limited thereto or thereby, some examples will be discussed below, illustrating standard and optional features of an exemplary method and/or system according to some embodiments of the present invention. The examples described the investigation of increasing flow rate in microfluidic chips by parallelization of channels. In the example given below acoustic waves were characterized in two types of materials: silicon and aluminum. Whereas silicon photolithographic etching is a very precise fabrication method, aluminum mechanical micromachining is less precise. In both cases, the variation of the acoustic resonance in parallel channels was studied. This variation was characterized and sweeping of the frequency was explored to compensate for the variation of the optimal frequency between channels. The examples show that simultaneous standing waves were created in all parallel channels. While a small channel dimension brings interesting properties to fluidics (low Reynolds number, high control, etc.), it inevitably also results in low throughput. In several applications, this disadvantage becomes limitative, especially in an industrial production environment. There are two main options to increase throughput in microsized channels: to increase the flow velocity and to increase the channel volume. The flow rate can be increased with higher pump regime, but this strategy is rapidly limited by chip residence time requirements. There are different ways to increase the volume. First, the microchannel section (width and dept) can be increased, but only until it results in a loss of the useful micro-sized properties. The channel length can also be increased, at the expense of an increased footprint and a higher pressure drop. Acoustic waves are transmitted in the microfluidic channel only in the region above the transducer. In this chapter, throughput was increased by parallelization of multiple channels on a single chip. Some studies already addressed the low throughput of microfluidics by performing process parallelization. Production of droplets and particles with multiple outlets has been proposed by different researchers. In terms of separation, a device with 8 parallel channels is proposed that can potentially isolate magnetically tagged bacteria from 100mL water samples in less than 15min. A device with parallel asymmetric zig-zag channels focusing particles with Dean vortices was developed. Acoustophoresis was used in parallel channels to produce more than 12000 multicellular aggregates within a few minutes.

Next to increase of the throughput, industrial fields require simple, low cost and easy fabrication of the microfluidic devices. Micro-sized devices can be processed by different fabrication methods and into a large variety of materials. Photolithographic etching of Si-based chip is a well-established method, but it is expensive and time-consuming. It nevertheless produces chips with nearly vertical sidewalls, ensuring high quality acoustic standing waves. Mechanical micromachining fabrication of prototypes, on the contrary, is simple, cheap and fast. In comparison, it however suffers from imprecision. One of the main limitations for the generation of acoustic standing waves in microchannels is that its successful use strongly depends on the channel dimension and geometry.

Mechanical micromachined chips were recently developed for acoustofluidic applications. Simple BAW transversal resonators were fabricated in aluminum. The main channel was covered by a piece of PDMS, despite its low acoustic impedance. If the generation of standing waves has been demonstrated in aluminum-based (Al-based) chips with a single channel, the exercise is more complex with parallel channels. Indeed, each channel has its own geometry-dependent resonance. Despite multiple channels can be parallelized on a single chip there is only one vibration generated by a single transducer. This is a challenge for both Al- and Silicon-based (Si-based) chips.

In a transversal resonator, particles experience two main forces: the drag force due to the streaming and the radiation force due to the scattering of the acoustic waves. For PS particles in a rectangular channel, a critical particle diameter of about 1.4$\mu$m was calculated. Above this dimension, the radiation force dominates, and particles are focussed near the node(s). Industrial upscaling of acoustofluidic treatment is highly desired for many applications. In this chapter, the radiation force on large PS particles was characterized in multiple parallel channels in function of the acoustic wave frequency. The study was first conducted in silicon substrate and subsequently in aluminum. In both substrates, we explored a newly introduced sweeping methodology of the acoustic wave frequency to obtain efficient and simultaneous standing waves in all parallel channels.

In this example, the effect of parallelization and chip manufacturing imperfections on the acoustic resonance is discussed. It also introduces sweeping of the frequency to induce simultaneous resonance in all channels at the same time.

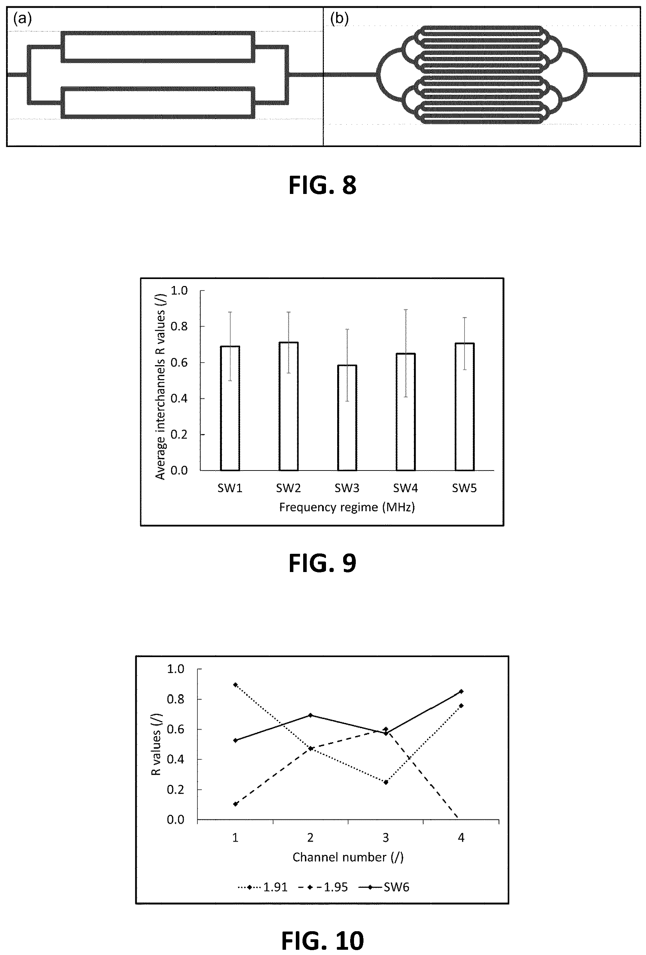

Parallelization was studied in two different chip designs, represented in Fig. 8. Both flow distributors consisted of channels which were successively divided in two.

After the flow distribution, the central part of the chip consisted of multiple parallel channels. In the first design, there were two division sections leading to 4 parallel channels. In the second design, four divisions were leading to 16 parallel channels. All channels had an identical width of $375\mu m$. The channels finally joined one another to reach the single outlet through a structure which was a mirror image of the inlet structure.

Both designs were produced in silicon by photolithographic etching and in aluminum by mechanical micromachining. In Si-based chips, channels were $250\mu m$ deep. The channels of the Al-based chips were $150\mu m$ deep.

The Si-based chips have been fabricated in the MESA+ cleanroom (UTwente, Netherlands). The channels were designed in a positive resist using mid-UV lithography (photoresist: Olin 907-12). In a second step, there were etched by Bosch-type deep reactive ion etching in a silicon wafer with a thickness of $525\mu m$ (Adixen AMS100SE, Pfeiffer Vacuum SAS, France). Next the resist was removed with oxygen plasma and nitric acid. The silicon wafers were finally sealed by anodic bonding of a Pyrex wafer ($500\mu m$ thick).

The Al-based chips have been produced in the $\mu$Flow lab at VUB. Channels were milled in aluminum plates, having the same thickness as the Si-based chips, with a CNC machine (Datron Neo, Datron, Germany). In a second step, 1.5 ml of polyurethane acrylate UV adhesive (Optimax 3116, Novachem, Ireland) were spin coated (Spincoater P6700, Speciality Coating Systems Inc, USA) on microscope slides at 1600 rpm for 60s. The glass slides were clamped on the aluminum pieces to close the system and the assemblies were finally exposed to UV light for 240s.

To generate standing acoustic waves in the channels, a piezoelectric transducer (PZT) ($15\times20\times1mm$, APC International Ltd., USA and Canada) with a resonance frequency at 2.00MHz was placed against the microfluidic chips. A thin glycerol layer ensured the coupling of the PZTs to the chips. The PZTs were controlled by a frequency generator (AFG1062, Tektronix UK Ltd., UK). The applied voltages were amplified by a RF power amplifier (210L, Electronics & Innovation, USA) with a power output of 10 Watt.

The complete assembly was held together keeping each part at a fixed position by a PMMA holder fixed with screws. The holder was milled with the CNC machine in $\mu$Flow lab at VUB. Screws were tightened with a constant torque of 15cNm.

Fluorescent polystyrene (PS) particles of $5.19\mu m$ diameter (PS-FluoGreen-Fi199, Microparticles GmbH, Germany) were injected in the channels using a pressure control unit (LineUP serie, Fluigent, France). Particles were pictured with an inverted microscope (IX71 Olympus Corporation, Japan) equipped with a CCD camera (C9100-13, Hamamatsu Photonics, Japan). The microscope objective was systematically positioned at the begin of each channel with an FITC filter.

When applying the acoustic waves, particles were focused towards the center of the channel by the radiation force. In order to characterize the focusing efficiency, the bandwidths on which particles were visible at a steady state were measured. A strong radiation force resulted in narrow bands of particles. The voltage was properly chosen so that partial focusing of the particles in the channels was observed in order to distinguish the efficiency of the acoustophoresis between the channels. 7Vpp were applied on the PZT with the Si-based chips and 120Vpp with the Al-based chips. The treatment of the pictures was done using Matlab. Between each experiment the setup was completely dismantled and rebuilt following the same method.

The resonance parameter R, was defined as one minus the ratio of the bandwidth with and without acoustophoresis. If the acoustic waves were not in resonance in the channel, particles were not focused and $\boldsymbol{R} = 0$. On the contrary, an $\boldsymbol{R} = 1$ indicated a good resonance, as shown in FIG. 2.

It shows the method used to characterize the acoustic focusing of particles in a channel. Part (a) of FIG. 2 is an illustration of the bandwidth in different situations, $x_0$ was the bandwidth without acoustic waves, it was compared with the bandwidths with acoustic waves. Part (b) of FIG. 2 shows the resonance parameter R as defined and the characterization the resonance, from $x_1$ to $x_3$ where the resonance becomes- less and less efficient, (c) Pictures of the corresponding examples.

Table 1: List of the different sweeping regimes applied on the PZT with their associated parameters.

| Reference | Minimal frequency (MHz) | Maximal frequency (MHz) | Period (ms) |
|---|---|---|---|
| SW1 | 1.91 | 1.93 | 1 |
| SW2 | 1.91 | 1.93 | 10 |
| SW3 | 1.91 | 1.93 | 100 |

(continued)

| Reference | Minimal frequency (MHz) | Maximal frequency (MHz) | Period (ms) |
|---|---|---|---|
| SW4 | 1.90 | 1.94 | 1 |
| SW5 | 1.90 | 1.94 | 10 |
| SW6 | 1.91 | 1.94 | 10 |
| SW7 | 1.91 | 1.97 | 10 |
| SW8 | 1.85 | 2.00 | 10 |
| SW9 | 1.85 | 2.30 | 10 |
| SW10 | 2.00 | 2.30 | 10 |

Two types of frequency regimes were applied on the PZT. First, several single frequencies were applied between 1.80MHz and 2.40MHz. Second, sweeping regimes were applied. In this case the frequency changed with time following a sinusoidal trend. A sweeping regime was characterized by three parameters: the maximum and the minimum frequencies in MHz and the period in milliseconds (ms). The graph in FIG. 3 represents two frequency regimes of the voltage applied on the PZT as a function of time. A single frequency of 1.91MHz is represented by the horizontal dashed line and a sweeping of the frequency between 1.80 and 2.20MHz with a period of 10ms is represented by the full line. The parameters of the different sweeping regimes applied during the experiments, named from SW1 to SW10, are given in Table 1. Five chips were tested, two in silicon with 4 and 16 parallel channels and three in aluminum, two with 4 and one with 16 parallel channels.

The results in Si-based chips are first shown followed by the results in Al-based chips.

In Si-based chips, a good resonance was observed between 1.90 and 1.95MHz with 4 parallel channels and between 1.91 and 1.98MHz with 16 parallel channels.

In a first step, the effect of the sweeping period has been estimated. The histogram in Fig. 9 represents the average interchannels $R$ values in the 4 channels as a function of the sweeping regime. The sweeping regimes SW1, SW2 and SW3 had a minimal and a maximal frequency of 1.91 to 1.93MHz with periods of 1, 10 and 100ms. SW4 and SW5 had a minimal and a maximal frequency of 1.90 to 1.94MHz with periods of 1 and 10ms. In both frequency bands, the period of 10ms (SW2 and SW5) resulted in a higher average $R$ value. It also had a smaller standard deviation. The difference between periods however remained in the standard deviation.

All sweeping regimes applied in the following experiments were done with a period of 10ms. The results discussed further are based on measurements repeated two or three times. Between measurements, the setup was dismantled and rebuilt. The confident intervals of the graphs represent the standard deviation of the average interchannels $R$ values between dismantled and rebuilt setup. The plotted variances were calculated on the $R$ values in all channels in all experiments.

The graph in FIG. 10 represents the $R$ values as a function of the channels. Each curve represents one frequency regime. To keep a readable graph, three of them were plotted. The first two curves represent single frequencies of 1.91 and 1.95MHz. The third curve represents the sweeping regime SW6. When the frequency was 1.91MHz, $R$ was high in channels 1 and 4 and intermediate in channels 2 and 3. When 1.95MHz was applied, the situation was intermediate for channels 2 and 3 but low $R$ values were observed in channels 1 and 4. SW6 resulted in a medium to high $R$ value in all the channels.

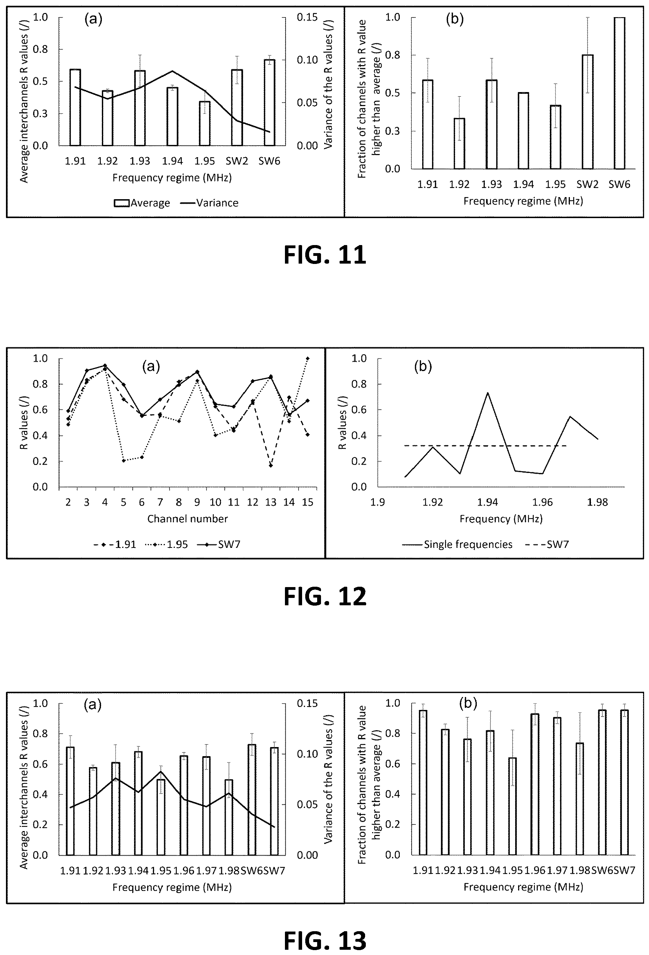

The left histogram in Fig. 11 (a) represents the average interchannels $R$ values as a function of the frequency regime (left scale). The value was the highest for SW6. Close values were observed at 1.91 and 1.93M Hz and SW2. The average $R$ value was lower for the other regimes. In this graph the variances of $R$ in all channels (line, right scale) were plotted. A high variance resulted from a situation with high $R$ values in some channels and low $R$ values in others. Low variances resulted from $R$ values close to each other in all channels. The lower variances of the two sweeping regimes indicated that all the channels were in resonance, in contrast to the behavior for the single frequency regimes.

The second graph (b) in FIG. 11 represents the fraction of channels in which the $R$ value was higher than the total average $R$ in all channels and in all regimes as a function of the frequency regime. At single frequencies of 1.91 and 1.93MHz, high relative resonance was observed in almost 60% of the channels but with a certain variability between the different experiments. For SW2, 80% of the channels displayed a high relative resonance state but with a low reproducibility between experiments. SW6 resulted in a simultaneous high relative resonance in the 4 channels in all the tests.

The result for the Si-based chip with 16 parallel channels were plotted in FIG. 12 and FIG. 13. FIG. 12 (a) represents the $R$ values in channels 2 to 15 with the frequency regimes 1.91, 1.95MHz, respectively chosen for their high and low average $R$ values, and SW7. Due to the non-optimized flow distribution, insufficient number of particles were collected in channels 1 and 16 to allow for appropriate assessment of the resonance state.

The same trend was observed as in the previous chip. With single frequencies, high and low $R$ values were observed in the different channels. Low resonances were observed in channels 5 and 6 at 1.95MHz and in channel 13 at 1.91MHz. The sweeping resulted in a medium to high resonances in all the channels.

Two curves are plotted in FIG. 12 (b): the *R* values in channel number 8 as a function of the frequency are represented for single frequencies and SW7. Two single frequencies, 1.94 and 1.97MHz, displayed high *R* values. The sweeping approach resulted in an averaged *R* value, lower than the optimal ones but higher or close to the other ones.

In FIG. 13 (a), the average interchannels *R* values (histogram, left scale) were the highest for the single frequency 1.91MHz and the two sweeping regimes, SW6 and SW7. The averages were lower for all the other tested frequencies. The variances of the *R* values in all channels (line, right scale) were again lower for the sweeping regimes, indicating a lower variation of the R value between the channels.

The fraction of channels with *R* value higher than the total average *R* are represented in the second graph (b) as a function of the regimes. It illustrated again the advantage of the sweeping of frequency with close to 100% of channels with a high relative resonance. 1.91MHz was the only single frequency reproducing this result.

In conclusion, for the employed Si-based chips, with 4 as well as with 16 channels, the applied sweeping regimes resulted in a high average interchannels *R* value combined with a low variance. Some single frequencies resulted in an equivalent average *R* value, but the higher variance indicated that next to some channels with good resonances, low resonances were observed in others. The proportion of channels with a high relative resonance confirmed this result. In each channel separately, the sweeping approach resulted in an averaged R value, lower than with the optimal single frequency(ies) but higher than the other ones.

Compared to Si-based chip, in Al-based chip, resonance was observed on a different and larger frequency band, between 1.80MHz and 2.40MHz.

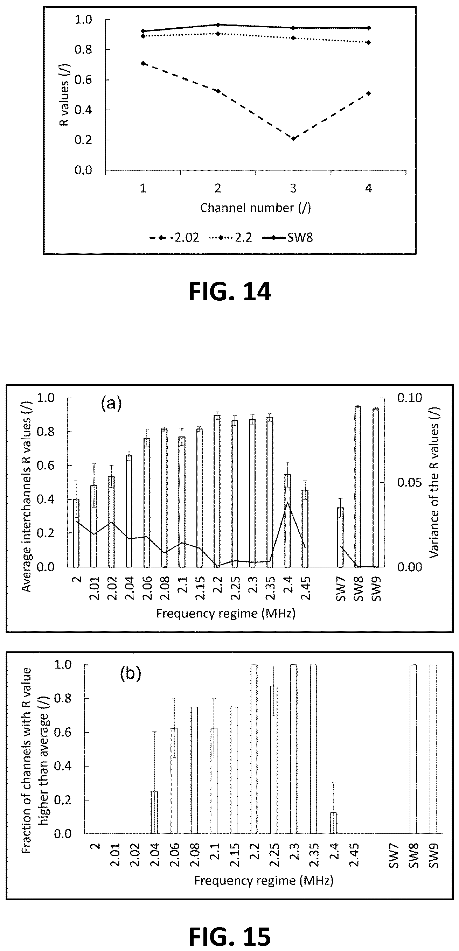

In the case of Al-based chip with 4 channels, two identical chips were fabricated and tested. The results of the first chip are first detailed. The graph in FIG. 14 represents the *R* values as a function of the channels. Three frequency regimes are plotted, 2.02MHz, 2.20MHz and SW8. At 2.02MHz, the *R* values varied between 0.20 and 0.75 in function of the studied channel. At 2.20MHz as well as with the sweeping regime, the *R* values were high in all channels.

In the histogram in FIG. 15(a) (left scale), the average interchannels *R* value was close to 1 for the single frequencies 2.20, 2.25, 2.30 and 2.35MHz and with the SW8 and SW9. The average *R* values obtained with the sweeping regimes were slightly higher with a variance (line, right scale) which was slightly lower compared to single frequencies. The reproducibility (error bars) was also slightly better with the sweeping.

In the histogram in FIG. 15(b), the same situation was observed with the single frequencies 2.20, 2.30 and 2.35 and with the SW8 and SW9. They all resulted in 100% of channels with a high relative resonance.

The experiments with the second Al-based chip with 4 parallel channels gave different results. The optimal single frequency was 1.91MHz with an average *R* value of 0.50±0.10 with the fraction of channels with high relative resonance of 0.62±0.18. The sweeping regime SW9 resulted in an average *R* value of 0.58±0.01 and all channels with high relative resonance. In this chip, the sweeping regime SW9 was clearly better than the single frequency regimes.

It is interesting to point that the SW9 was the best or equal to the best regime in both chips while the best single frequency changed from one chip to the other.

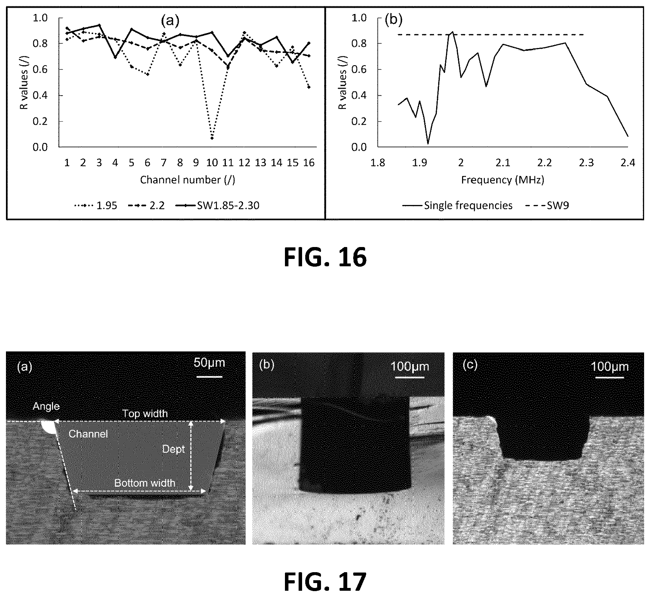

FIG. 16 (a) illustrates the *R* values in the 16 channels are represented when the single frequencies 1.95 and 2.20MHz and SW9 were applied. At 1.95MHz, *R* value was low in channel 10 and varied between medium and high resonance in other channels. At 2.20MHz and with the sweeping, the resonance was relatively high in all channels. The two curves, plotted in FIG. 16 (b), represent the *R* values as a function of the frequency in the channel number 8, for single frequencies and SW9. Unlike in Si-based chip, the sweeping resulted in resonance close to the best single frequencies observed, 1.98 and 1.97MHz. With all other single frequencies *R* value was lower.

In the first histogram, in Fig. 6, the average *R* value was close to 0.8 for the single frequencies 2.20MHz and for the SW8 and SW9 (left scale). Here, for the sweeping regimes the averages were slightly higher and the variances (lines, right scale) slightly lower compared to 2.20MHz. The smaller error bars also indicated a better reproducibility.

In the second histogram in FIG. 7, SW8, SW9 and 2.2MHz systematically resulted in 100% of the channels with *R* value above the average.

In conclusion, for the Al-based chips, the applied sweeping regimes resulted in a high average interchannels *R* value combined with a low variance. Several single frequencies reproduced this result. The proportion of channels with a high relative resonance confirmed this result. In each channel separately, the sweeping approach resulted in an R value equivalent to the best single frequency.

In order to observe the sections of the channels, the two types of chips were cut. FIG. 17 (a) illustrates the different dimensions measured. FIG. 17 (b) and (c) depict the sections in Si- and Al-based chip respectively. The target dimensions of these channels were 375×350μm in silicon and 375×150μm in aluminum. In Table 2 statistics are given, based on measurements of 5 channels in Si-based chip and 16 channels in Al-based chip.

The Al-based chip was fabricated by milling and adhesive bonding. The Si-based chip was fabricated by photolithographic etching and anodic bonding.

In term of depth, the milling technique was accurate with a depth less than 1μm below the target. Both techniques had a similar precision with respect to depth, with a standard deviation around 6μm. The bottom of both chips were slightly curved but it was more pronounced in the Si-based chip.

In terms of channel width, the milling had an important lack of accuracy with, at the top, a channel which was 43.6μm smaller than the targeted and software programmed value of 375μm. In this dimension, the precision of the milling continued, with a standard deviation in the range of 6μm. In contrast, the photolithographic etching approach was clearly superior with respect to the width dimension. It was more accurate and precise compared to aluminum. The top of the channel width fitted with the target and the deviation was smaller than 3μm. Regarding the wall verticality, again the photolithographic etching approach was accurate with an angle of 89.1°. Milling resulted in an important taper, with angles of more than 101°.

Table 2 Measurements of channels sections in Si- and Al-based chips. 16 channels were measured in aluminum and 5 channels in silicon.

|  | Aluminum | Silicon |
|---|---|---|
| Target dept (μm) <br> Average dept (μm) | 150.0 <br> 149.3 ± 6.0 | - <br> 337.6 ± 5.3 |
| Target width (μm) <br> Average width (top) (μm) <br> Average width (bottom) (μm) | 375.0 <br> 331.4 ± 6.8 <br> 272.6 ± 5.5 | <br> 375.1 ± 2.4 <br> 386.0 ± 2.8 |
| Target angle (°) <br> Average angle (°) | 90.00 <br> 101.1 ± 0.8 | <br> 89.1 ± 0.1 |

The developed particle focusing characterization method had the advantage to allow for a fast and precise collection of a high amount of data. For instance, in Al-based chip with 16 parallel channels, 16 measurements, one per channel, were be collected for each frequency regime (off, 26 single frequencies between 1.80 and 2.40MHz and three sweeping regimes). It represented 30∗16=480 measurements, for one experiment in one chip.

In terms of reproducibility of measurements, the Si-based chip with 16 parallel channels has been tested two times under the same conditions, without dismantling and rebuilding of the setup, before and after different experiments with variable parameters (voltage, frequency).

The standard deviation of the measurements of the $R$ values was 0.03, based on 60 measurements. This indicated a good reproducibility of the measurement method. When dismantling and rebuilding the same chip, the standard deviation increased from 0.03 to 0.11. This showed that, despite an elaborated building method (holder torque screwdriving, controlled volume of glycerol for coupling layer), the variation of the resonance was to a great extent attributed to variations occurring when assembling of the setup.

The two types of chips materials, silicon and aluminum, were compared. First the impact of the channel geometry was briefly introduced. Next the higher power required in Al-based chip was discussed. Finally, the efficiency of the sweeping of the frequency was characterized.

The channel width and the frequency for the generation of acoustic standing waves are mathematically linked.

As detailed in Table 2, in Si-based chips, the channel width variation was narrow thanks to the high verticality of the walls. The difference in dimension between the top and the bottom on the channel was in average, 10.0μm. The theoretical frequencies, corresponding to the top and the bottom channel width, are respectively 2.00 and 1.94MHz. It is close to the experimental resonance frequencies observed between 1.90 and 1.98MHz.

In the Al-based chips, a wider range of frequency induced resonance was observed, this could be explained by the taper of the channel. The measured angle was in average 101.1° which resulted from a difference in channel width of 58.7μm between the top and the bottom of the channel. The channel width at the top was 331.4μm. These dimensions correspond to resonance frequencies of 2.26 to 2.75MHz. The PZT is optimized for a vibration at a frequency of 2MHz. The matching between frequency actuation and channel dimension could explain the observed resonance in the band of 2.20 to 2.35MHz. This is further elaborated in the next section.

The averages R values in the Si- and Al-based chips, with 4 and 16 parallel channels at all frequency regimes are given in Table 3. These values were used as a relative reference to generate the graphs of the fraction of channels with a high relative resonance.

Table 3: Averages R values in all channels and at all frequency regimes, in the different chips tested.

|  | 4 channels | 16 channels |
|---|---|---|
| Aluminum | 0.77 | 0.66; 0.62 |

(continued)

|  | 4 channels | 16 channels |
|---|---|---|
| Silicon | 0.54 | 0.65 |

Voltages of 7Vpp and 120Vpp were applied on Si- and Al-based chips respectively, i.e., 17 times higher in Al-based chips. These conditions resulted in relatively close values of $R$, especially with 16 channels. Two reasons were discussed in this section.

First there is a significant difference between the acoustic impedance of the silicon-based and aluminum-based chip. On one side, aluminum has an acoustic impedance slightly higher than silicon and on the other side the adhesive bonding of aluminum involves a thin layer of polyurethane glue, absent in anodic bonding between glass and silicon.

Second, the acoustic vibration amplitude could be lower in aluminum due to lower matching between the channel and the PZT vibration frequency. It indeed has an average width at the top of the channel of 331.4$\mu$m and a taper of 101.1°, with the PZT having an optimal vibration frequency at 2MHz, corresponding to a channel wall of 375$\mu$m.

These two reasons are discussed in detail in this section.

An acoustic wave is well transmitted between two materials with similar acoustic impedances. On the contrary, an acoustic wave is well reflected between two materials with different impedances. The impedance of water is 1.49 $10^6$kg/m$^{-2}$.s. In comparison, the impedances of silicon and aluminum are relatively close to one another, i.e. 19.79 $10^6$kg/m$^{-2}$.s and 17.33 $10^6$kg.m$^{-2}$.s, respectively. The reflection of acoustic waves in the two materials should therefore be close to one another. A setup with a Si-based chip coupled with a PZT through an aluminum piece exists where the waves were properly transmitted from the PZT to the liquid in the channel.

The main difference in the structure, between the Si- and Al-based chips used in this chapter, resided in the bonding layer, in which energy could be dissipated12. In Si-based chips, the anodic bond led to a direct and intimate link between the silicon and the pyrex glass cover. In Al-based chips, the aluminum and the glass cover were bonded with a thin layer of polyurethane acrylate UV adhesive.

The speed of sound in a solid is linked to its coefficient of compressibility and its density through the Newton-Laplace expression given in the following esquation.

$$c = \sqrt{\frac{K}{\rho_a}}$$

with c the speed of sound in the material, $K$ the coefficient of compressibility and $p_a$ the material density.

According to its technical data sheet, the cured polyurethane acrylate has a coefficient of compressibility of 8.84MPa and a density of 1200kg/m$^3$. An acoustic impedance of 1.03 $10^5$kg.m$^{-2}$.s could be calculated. This value should be considered as a rough estimation, indeed, the coefficient and the density are influenced by the polymerization rate (UV exposition, reaction temperature, etc.). This impedance does not fit with aluminum and glass but is even lower than the one of water. Significant dissipation of acoustic energy was suspected to occur in this layer.

An alternative adhesive with higher compressibility and/or density might improve the transmission of energy. For instance, the glass cover was replaced by a layer of PDMS in literature8,9. PDMS has an acoustic impedance of 1.04 $10^6$kg.m$^{-2}$.s, higher than polyurethane acrylate but still too low for a high reflection coefficient.

Two parameters influence the amplitude of the acoustic wave in the channel. On one side, this amplitude can be increased by optimizing the interference between the initial and the reflected waves i.e., a fitting between the channel width and the frequency. On the other side, the amplitude increases with the increasing of vibrations amplitude of the channel walls, which comes from the vibration of the PZT.

The vibrations amplitude of the PZT increase with the voltage, but, at the same time, the PZT thickness is optimized to induce vibrations at a specific frequency. In practice, the vibrations are induced in a frequency band around the theoretical one, the closer the frequency to the theoretical one, the higher the amplitude. The PZT used was optimized for vibrations at 2.00MHz.

In theory, optimal resonance frequency in Al-based chips channels is between 2.26 and 2.75MHz. This band was between 1.94 and 2.00MHz in Si-based chips channels. The fitting between the resonance of the PZT and the resonance of the channels might explain the higher voltage required in the Al-based chips to generate similar acoustic waves amplitude.

Finally, the lower precision of the Al-based chips microfabrication resulted in an important taper of the channels. As detailed in Table 2, the channels had, in average, dimensions of 272.7 to 331.4$\mu$m from bottom to top part of the channels. It means that, at a given frequency, only a small portion of the channel height was in resonance, the one fitting the dimension. This probably resulted in a reduced transfer of the acoustic energy in the channel. This effect was less pronounced in Si-based chips with a smaller taper.

The above three cited reasons could be all partially responsible for the requirement of a 17 higher voltage in Al-based chips to result in close acoustic resonances in the two chips materials.

The effect of the sweeping is first described in Si- and Al-based chips. Second, the effect of the sweeping on the average resonance in parallel channels was discussed. Finally, the interest of the sweeping in a production environment was investigated.

In an ideal situation, all channels are identical and perfect. Based on the fitting between the acoustic wave and the dimension, all channels should have one optimal resonance frequency, and this frequency is the same for all of them. Experimentally, more than one single frequency resulted in a good resonance. However, these resonances changed from one channel to the other and a fitting between all of them was not systematically noted.

In Si-based chips, in each channel, high resonances were observed in some frequencies and almost no resonances in others. It was explained by the channel geometry. The walls, which were almost vertical, resulted in a narrow resonance frequency which could change from one channel to the other. The sweeping resulted in an average resonance i.e., lower than the best but higher than the worst. For a chip with a single channel, the sweeping is therefore not interesting. In case of multiple parallel channels, the sweeping gave access to simultaneous average resonances in all channels, which was not always possible with single frequencies.

In each channel, in Al-based chips, this trend was less clear and medium to high resonances were observed on a larger band of single frequencies. This result could be explained again by the channel geometry. The variation of the channels width with the taper resulted in a resonance on a larger frequency band. However, in contrast to the experiments conducted with silicon devices, the sweeping resulted in a resonance state close to the best single frequency.

The sweeping was therefore advantageous in both Si- and Al-based chips, but for a different reason.

Next to analysis with single channel and single frequencies, in all chips, in average, the sweeping resulted in the best or equal to the best interchannels average R value. The sweeping brought about two advantages. First, it ensured stability of the results and second, it allowed to skip the optimization of the frequency, which otherwise must be performed at every modification of the setup and the chip. Moreover, in all these cases, the sweeping mitigated the variability, indicated in graphs by lower variances. It means that the R values had close values to each other in all the channels.

In a production environment, with multiple parallel channels, sweeping could offer several advantages.

First, several applications take advantage of the streaming, generated by acoustic standing waves, for mixing. The objective is to decrease the residence time distribution in microreactors. The improved mixing results in a better selectivity of the reaction and therefore better quality and/or purity of the product. The simultaneous resonance in all channels is important, even at the cost of a smaller resonance. The efficiency of the sweeping at this level was indicated by the lower variance as well as with the proportion of channels in resonance.

The second advantage of the sweeping is that the frequency optimization could be skipped. It is the case between different chips but also when a setup must be dismantled and rebuilt, for instance to proceed to cleaning or changing pieces.

A last advantage was related to flexibility in the composition of the used streams. The optimal resonance frequency in a channel depends on the speed of sound in the liquid which is influenced by the medium composition. Here, the sweeping approach offers the potential to ensure resonance when the composition of the liquid in the channel changes. Looking further into a potentially more complex application, this is likely to occur. For instance, the reaction happening in the reactor results in a difference of composition between the inlet and the outlet. In a more advanced operation, different reactions in a single microreactor could be targeted.

In conclusion, acoustic focusing of particles in flow was characterized to reveal insights in the resonance state of multiple channels at a range of frequencies. A method was developed to quantify the acoustophoresis of particles by the radiation force and therefore the resonance of acoustic waves. It was based on the measurements of bandwidths at which particles in flow were focused. The smaller the bandwidth, the higher the radiation force and the acoustic resonance. This method was fast and precise, allowing to test a large set of parameters, including chips designs and materials, parallel channels and wave frequencies.

Two designs, with 4 and 16 parallel channels were tested in two materials. On one side, silicon was chosen for its well-known acoustic behavior and precise microfabrication process (photolithographic etching). On the other side, aluminum has a good acoustic impedance. Al-based chips were fabricated by mechanical micromachining, a fast and simple process. The cross sections of the channels were measured in the two materials and the precision of the methods were described. As expected, mechanical micromachining was less precise. Channels width in aluminum were smaller with a larger standard deviation and a more pronounced taper shape.

Two types of acoustic waves frequency regimes were tested. First, single frequencies between 1.91 and 1.98MHz and 1.80 and 2.40MHz were applied in Si- and in Al-based chips, respectively. Second, the resonance state was characterized when sweeping the frequency.

With single frequency regimes, a good resonance was observed at higher frequency and on a larger band in aluminum compared to silicon. These facts were attributed to the channel geometry. First, a smaller channel width corresponds to a higher resonance frequency. Second, the taper shape could result in a difference in the channel width between the top and the bottom, enlarging the frequency band on which resonance was observed.

In both materials, different resonance frequencies between channels were observed. Beyond structural differences, the influence of several parameters was discussed. The building of the setup, for instance, introduced a variability.

In Si-based chips, in one channel, several single frequencies resulted in a high resonance while no resonance was observed in others. The sweeping of frequency resulted in an average resonance state, lower than the resonances with optimal frequencies. Regarding resonances in parallel channels in a single chip, no single frequency fitted all channels, resulting in absence of resonance in some channels. Sweeping brought the possibility to generate an average similar resonance in all channels.

In Al-based chips, with single frequencies, a high resonance in a single channel was observed for a large frequency band. Consequently, simultaneous resonance in parallel channels with a single frequency was possible. However, contrary to what was observed for silicon devices, sweeping of the frequency resulted in the same or very close R value to the best single frequency.

Compared to silicon, the Al-based chips required a higher voltage to generate resonance. Three reasons were discussed. First, a portion of the acoustic energy could be dissipated in the adhesive layer. Second a mismatching between the optimal vibration frequency of the PZT and the optimal vibration frequency of the channels could result in a lower acoustic amplitude. Finally, the taper shape could result in a smaller portion of the channel with a dimension fitting with acoustic waves.

For an industrial development, it was demonstrated that aluminum, as a material for acoustofluidic device, has a high potential. It however requires further optimizations on the microfabrication method, both on the milling and the bonding steps.

In both materials, frequency sweeping was an interesting approach. First it allowed to obtain a similar resonance state in all parallel channels. Second, it turned the frequency optimization step obsolete, a step which would normally be required after every modification of the setup, for instance for cleaning or maintenance. Finally, the potential application includes further increasing the number of channels in parallel, leading to higher throughput, but also a variation of the liquid composition can be coped with.

It is to be understood that although preferred embodiments, specific constructions and configurations, as well as materials, have been discussed herein for devices according to the present invention, various changes or modifications in form and detail may be made without departing from the scope of this invention. Steps may be added or deleted to methods described within the scope of the present invention.

**Claims**

1. A method of influencing particles or flow in a plurality of microfluidic channels or channel sections, the method comprising

   - obtaining a fluidic flow in a plurality of microfluidic channels or channel sections,
   - inducing acoustic resonance in the plurality of microfluidic channels or channel sections for influencing the flow or particles in the flow,

   wherein said inducing acoustic resonance is obtained by applying to the plurality of microfluidic channels or channel sections a common acoustic signal having a frequency varying in a frequency range.

2. A method according to claim 1, wherein the frequency is swept in the frequency range.

3. A method according to any of the previous claims, wherein the frequency range encompasses the frequencies of the acoustic resonance associated with each of the plurality of microfluidic channels or channel sections.

4. A method according to any of the previous claims, wherein the frequency is varying in a repetitive manner.

5. A method according to any of the previous claims, wherein varying the frequency in the frequency range is performed such that the different frequencies in the frequency range are applied at least once within a time frame of 100ms or smaller, e.g. 50ms or smaller, e.g. 25ms or smaller, e.g. 10ms or smaller, e.g. 5ms or smaller.

6. A method according to any of the previous claims, wherein the plurality of microfluidic channels or channel sections are parallel to each other.

7. A method according to any of the previous claims, wherein the plurality of microfluidic channels or channel sections have substantially the same dimensions.

8. A method according to any of the previous claims, wherein the microfluidic channel sections are interconnected, thus forming a single channel and wherein applying a common acoustic signal comprises applying an acoustic signal simultaneously to the different microfluidic channel sections of the single channel.

9. A method according to any of the previous claims, wherein applying a common acoustic signal comprises applying a power signal having a varying frequency on a piezo-electric transducer.

10. A system for influencing particles or flow in a plurality of microfluidic channels or channel sections, the system comprising

   - a microfluidic device having a plurality of microfluidic channels or channel sections,
   - a pumping means for providing a flow in the plurality of microfluidic channels or channel sections,
   - an acoustic resonance inducing means for inducing acoustic resonance in the plurality of microfluidic channels or channel sections for influencing the flow or particles in the flow, wherein the acoustic resonance inducing means thereby is adapted for applying to the plurality of microfluidic channels or channel sections a common acoustic signal having a frequency varying in a frequency range.

11. A system according to claim 10, wherein the acoustic resonance inducing means comprises a piezoelectric transducer, an electric source for applying a power to the piezoelectric transducer and a controller for controlling the frequency of the power applied to the piezoelectric transducer to vary in a frequency range during acoustic resonance generation.

12. A system according to any of claims 10 or 11, wherein the acoustic resonance inducing means is adapted for applying the common acoustic signal in a frequency range encompassing the frequencies of the acoustic resonance associated with each of the plurality of microfluidic channels or channel sections.

13. A system according to any of claims 10 to 12, wherein varying the frequency in the frequency range is performed such that the different frequencies in the frequency range are applied at least once within a time frame of 100ms or smaller, e.g. 50ms or smaller, e.g. 25ms or smaller, e.g. 10ms or smaller, e.g. 5ms or smaller.

14. A system according to any of claims 10 to 13, wherein the plurality of microfluidic channels or channel subsections are parallel to each other and/or wherein the plurality of microfluidic channels or channel subsections have substantially the same dimensions and/or wherein the plurality of microfluidic channel subsections or part thereof are interconnected to form a single channel.

15. Use of a method according to any of claims 1 to 9 for any of selecting particles in flow streams, contacting with particles in flow streams, focussing particles in flow streams, guiding particles in flow streams, mixing particles in flow streams, mixing flow streams, contacting flow streams, in a plurality of microfluidic channels or channel sections.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

EP 4 431 909 A1

FIG. 11

FIG. 12

FIG. 13

**FIG. 14**

**FIG. 15**

FIG. 16

FIG. 17

Europäisches
Patentamt

European
Patent Office

Office européen
des brevets

## EUROPEAN SEARCH REPORT

Application Number

EP 23 16 2493

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/041135 A1 (KHISMATULLIN DAMIR [US] ET AL) 9 February 2023 (2023-02-09) * paragraphs [0071], [0123], [0125], [0146] – [0150], [0180]; figures 7,8 * | 1-15 | INV. G01N15/14 B01L3/00 |
| X | US 2021/283607 A1 (AUGUSTSSON PER [SE] ET AL) 16 September 2021 (2021-09-16) * paragraphs [0131], [0132], [0159]; claims 1,10,14; figures 1-6 * | 1-15 | |
| X | US 2022/143611 A1 (PAULICKA PETER [US] ET AL) 12 May 2022 (2022-05-12) * paragraphs [0084] – [0089]; figure 1 * | 1-3,5, 9-13,15 | |
| A | US 2019/160463 A1 (AI YE [SG] ET AL) 30 May 2019 (2019-05-30) * abstract * | 1-15 | |
| A | US 2020/359136 A1 (LIPKENS BART [US] ET AL) 12 November 2020 (2020-11-12) * paragraph [0106]; figure 2 * | 1-15 | |

TECHNICAL FIELDS SEARCHED (IPC)

G01N
B01L

The present search report has been drawn up for all claims

| Place of search | Date of completion of the search | Examiner |
|---|---|---|
| The Hague | 2 August 2023 | Viskanic, Martino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 431 909 A1

### ANNEX TO THE EUROPEAN SEARCH REPORT
### ON EUROPEAN PATENT APPLICATION NO.

EP 23 16 2493

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2023

| Patent document cited in search report | | Publication date | Patent family member(s) | | Publication date |
|---|---|---|---|---|---|
| US 2023041135 | A1 | 09-02-2023 | AU | 2021214143 A1 | 18-08-2022 |
| | | | CA | 3165491 A1 | 05-08-2021 |
| | | | EP | 4096848 A1 | 07-12-2022 |
| | | | JP | 2023512659 A | 28-03-2023 |
| | | | US | 2023041135 A1 | 09-02-2023 |
| | | | WO | 2021154890 A1 | 05-08-2021 |
| US 2021283607 | A1 | 16-09-2021 | AU | 2017339580 A1 | 18-04-2019 |
| | | | CA | 3038003 A1 | 12-04-2018 |
| | | | CN | 109803764 A | 24-05-2019 |
| | | | EP | 3523026 A1 | 14-08-2019 |
| | | | JP | 6998387 B2 | 18-01-2022 |
| | | | JP | 2020502539 A | 23-01-2020 |
| | | | US | 2021283607 A1 | 16-09-2021 |
| | | | WO | 2018065626 A1 | 12-04-2018 |
| US 2022143611 | A1 | 12-05-2022 | CA | 3172154 A1 | 04-11-2021 |
| | | | CN | 115397967 A | 25-11-2022 |
| | | | EP | 4143294 A1 | 08-03-2023 |
| | | | IL | 297609 A | 01-12-2022 |
| | | | JP | 2023521244 A | 23-05-2023 |
| | | | US | 2022143611 A1 | 12-05-2022 |
| | | | US | 2022355294 A1 | 10-11-2022 |
| | | | WO | 2021222084 A1 | 04-11-2021 |
| US 2019160463 | A1 | 30-05-2019 | SG | 11201808705X A | 29-11-2018 |
| | | | US | 2019160463 A1 | 30-05-2019 |
| | | | WO | 2017176211 A1 | 12-10-2017 |
| US 2020359136 | A1 | 12-11-2020 | AU | 2018385759 A1 | 07-05-2020 |
| | | | BR | 112020009889 A2 | 03-11-2020 |
| | | | CA | 3085784 A1 | 20-06-2019 |
| | | | CN | 111480345 A | 31-07-2020 |
| | | | CN | 114900773 A | 12-08-2022 |
| | | | EP | 3725092 A1 | 21-10-2020 |
| | | | IL | 274333 A | 30-06-2020 |
| | | | JP | 2021507561 A | 22-02-2021 |
| | | | KR | 20200089334 A | 24-07-2020 |
| | | | KR | 20220066413 A | 24-05-2022 |
| | | | SG | 11202003907W A | 28-05-2020 |
| | | | US | 2019191252 A1 | 20-06-2019 |
| | | | US | 2020359136 A1 | 12-11-2020 |
| | | | WO | 2019118921 A1 | 20-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015253226 A1, Laurell

- WO 2014178782 A1

**Non-patent literature cited in the description**

- **S. M. HAGSATER et al.** *Lab Chip,* 2008, vol. 8, 1178-1184
- **GELIN et al.** Reducing Taylor-Aris dispersion by exploiting lateral convection associated with acoustic streaming. *Chem. Eng. J.,* 2021, 128031

- **WESTERBEEK et al.** Reduction of Taylor-Aris dispersion by lateral mixing for chromatography applications. *Lab-on-a-chip,* 2020, vol. 20, 3938-3947
- **WESTERBEEK et al.** in C-Term Reduction in 3 $\mu$m Open-Tubular High-Aspect-Ratio Channels in AC-EOF Vortex Chromatography Operation. *Analytical Chemistry,* 2023